# EUROPEAN PATENT SPECIFICATION

(11) **EP 2 750 877 B1**
(45) Date of publication and mention of the grant of the patent: **11.03.2015**
(21) Application number: 13759889.2
(22) Date of filing: 07.06.2013
(51) Int. Cl.: B32B 5/02, B32B 27/12, B65D 65/40, B65D 81/26, B32B 27/32

(54) **A NON-COMPOSITE PACKAGING MATERIAL WITH A HIGH TEARING RESISTANCE**
NICHTVERBUND-VERPACKUNGSMATERIAL MIT HOHER REISSFESTIGKEIT
MATÉRIAU D'EMBALLAGE NON COMPOSITE DOTÉ D'UNE RÉSISTANCE AU DÉCHIREMENT ÉLEVÉE

(30) Priority: 07.06.2012 TR 201206682
(43) Date of publication of application: 09.07.2014
(73) Proprietor: Atmaz Ambalaj Tekstil Sanayi Ve Ticaret Anonim Sirketi, Gaziantep (TR)
(72) Inventor: AKSOY, Yunus, Gaziantep (TR)
(74) Representative: Iskender, Ibrahim
(86) International application number: PCT/TR2013/000178
(87) International publication number: WO 2013/184079

(56) References cited:
- EP-A1- 2 184 162
- EP-A2- 0 825 019
- WO-A1-03/103957
- US-A1- 2006 258 240

## Description

### Technical Field

The present invention relates to the packaging materials providing the products to be protected against external factors such as scratching, water, moisture, oil and dust during the transportation and storing processes. The present invention especially relates to a double-lamination packaging material, which is non-composite, with a high resistance, made of a polypropylene braided woven fabric and nonwoven material, which are used in packaging the products made of glass, iron-steel, metal and aluminum material.

### State of the Art

Currently, there are many packaging materials used in packing the products made of glass, iron-steel, metal and aluminum products. The packaging materials can be used for carrying, preserving and storing purposes until they reach to the users. The products are exposed to many external factors during the transportation and storage processes. The factors are water, moisture, oil, dust and crushing. Therefore, in order to provide the products to be protected from getting damaged by these external factors, it is needed to use high-resistant packaging materials.

As they are hard and heavy, it is difficult to pack the materials made of glass, iron-steel, metal and aluminum. The materials used in packing these products should be resistant against water, damp or oil, prevent scratching and dusting and not be torn easily when it is crushed.

In the present art, some packaging materials such as craft paper, fiber-braided net, aluminum foil, nylon, PES film are used in packing the glass, iron-steel, metal and aluminum products for transportation and storage reasons. However these materials fall short in protecting the products that they cover from the external factors. As their level of resistance is low, they are easily torn. Therefore, the products inside the package get easily damaged by the external factors such as water, oil and dust.

The above-mentioned packaging materials such as craft paper and aluminum foil are laminated by polyethylene film and tried to be turned into a type which is water-, damp- and oil-proof and which is not easily torn. Moreover, the craft paper and the other packing materials are produced as multi-layer configurations, and therefore their resistance is increased. These packing materials can be used with fiber-braided net weavings. However the desired strength cannot be achieved in all of these packaging materials. In order to increase the level of resistance, the packages are made to turn into multi-layer thick and heavy configurations. This makes it more difficult to fold the packaging material in order to cover all the sides of the product during the packaging process. Moreover, the resistance necessary for tearing cannot be provided.

The corrosion occurring in the metal and its alloys during the transportation and storage processes is an undesired situation. Because, the corrosion negatively effects the material and product characteristics. Undesired changes take place in the physical, chemical, mechanical or electrical characteristics of the metal or alloys. The upper surfaces of the metal parts are covered with an oxide layer in damp environments and open air. If these circumstances continue, then the oxide layer is scattered onto the whole surface. Therefore it is desired that the packaging materials used in packing the iron-steel, metal and aluminum products be resistant against tearing and having such a characteristic that is preventing to get damage of products by the external factors such as water, damp, oil and dust.

As most of the packaging materials currently used in packing the glass, iron-steel, metal and aluminum products are of composite structure, it cannot be recycled as 100%. This condition causes high-cost packaging materials to be produced and the sources to be consumed in a short period of time.

The developments known in the state of the art are provided in the following:
The utility model with the number TR 2012 02450 and registered to the name ATMAZ AMBALAJ TEKSTIL SAN. VE Tic**.** 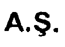 relates to a packaging material with a high resistance against tearing. The invention especially relates to a double-laminated packaging material made of a polypropylene braided woven fabric and craft paper used in packing the products made of iron-steel, metal and aluminum material. However as this packaging material is in a composite structure as a mixture of plastic and paper, it cannot be recycled to a degree of 100%. Therefore it is less preferred compared to the materials that are possible to be recycled.

The patent with a publication number TR 2008 09886 relates to a packaging, protecting, preserving material, the resistance of which is increased. The invention relates to a packaging, protecting, preserving and covering product comprises fibrous material which increases the resistance between two layers chosen among paper, nylon and aluminum foil. The packaging material according to the present invention can be used as cement bag or green-house nylon. However it hasn't got the adequate tearing resistance so as to be used in packing the products made of glass, iron-steel, metal and aluminum materials. Moreover the materials made of composite structures cannot be recycled to a 100%.

Therefore, in order to eliminate the problems resulting from the packaging materials in the state of the art, a new packaging material is needed which has various advantages compared to its fellows.

### Brief Description of the Invention

The present invention aims to eliminate the above-mentioned problems by being composed with an inspiration from the state of the art.

The prior object of the present invention is to provide a non-composite packaging material with a high tearing resistance.

The present invention aims to provide a packaging material which has higher resistance but of lighter structure compared to the other products.

An object of the present invention is to provide a packaging material which does not pollute the environment and which can be recycled to a 100% degree.

A further object of the present invention is to increase the usage of polypropylene braided woven fabric.

Another object of the present invention is to obtain a packaging material with a double protection against the external factors.

A further object of the present invention is to make it possible to print the product promotion onto a surface which is smoother compared to the current packaging materials.

A further object of the present invention is to provide a packaging material which can be used both in packing the products and also in similar fields such as flooring as an insulation material.

A further object of the present invention is to compose a packaging material which can be used in any kind of industries and which prevents the product that it covers from getting scratched or damaged.

The present invention relates to a packaging material for fulfilling the above-mentioned objects, characterized in comprising;
- A bottom layer made of nonwoven material composing the inner surface which is in contact with the packed product,
- A resistance layer made of polypropylene braided woven fabric providing resistance to the packaging material,
- A sticking layer located between the resistance layer and bottom layer,
- A protecting layer located on the resistance layer.

The structural and characteristic aspects and all the advantages of the present invention will be understood better thanks to the following figures and the detailed description written with certain references to these figures. Therefore while making the evaluation, these figures and the detailed description should be taken into account.

### Figures for a Better Understanding of the Invention

Figure-1: is the sectional view of the packaging material according to the present invention.
Figure-2: is the sectional view of the packaging material according to the present invention when its layers are separated from each other.

The figures do not need to be scaled, and the details which are not necessary for understanding the present invention may have been ignored. Moreover, the parts which are identical or which have identical functions to a great extent are shown with the same number.

### Description of the Part References

1. Packaging material
10. Bottom Layer
20.Sticking Layer
30.Resistance Layer
40.Protecting Layer

### Detailed Description of the Invention

In this detailed description, the packaging material (1) according to the present invention is described for a better understanding of the invention without posing any limiting effect.

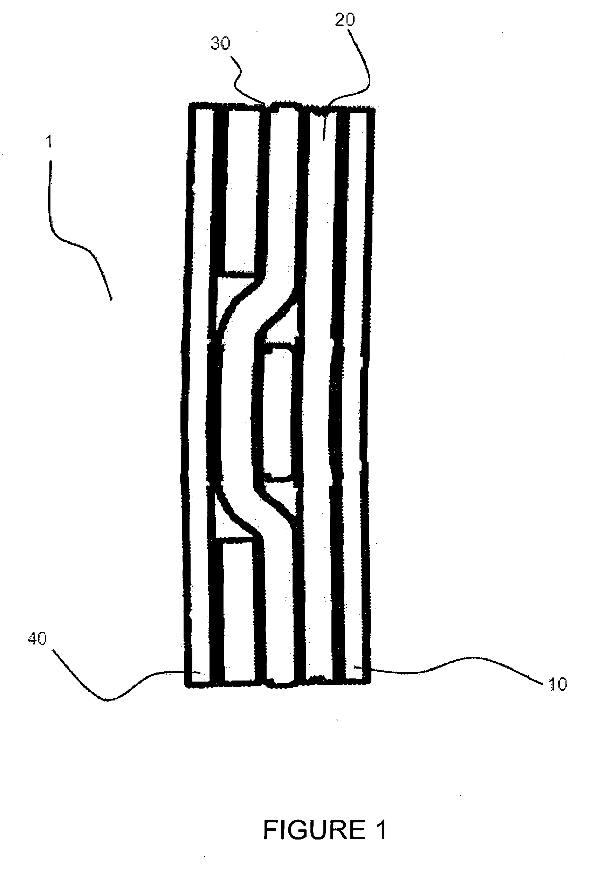

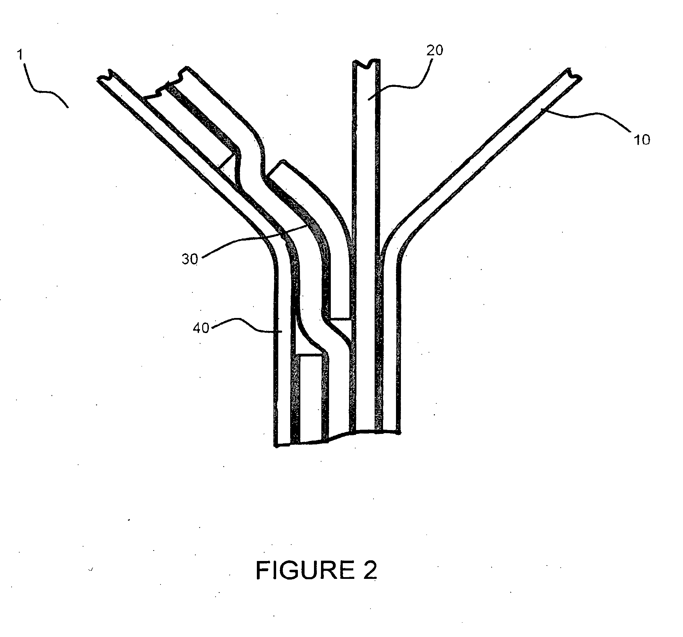

In Figure 1, the sectional view of the packaging material (1) according to the present invention is shown. As it is seen in the figure, the packaging material (1) comprises a bottom layer (10), a sticking layer (20), a resistance layer (30), and a protecting layer (40).

The bottom layer (10) forms the inner surface of the packaging material (10), which is in contact with the product. The bottom layer (10) is made of a nonwoven material preventing the iron-steel, metal and aluminum products that it covers against corrosion. As the nonwoven material (10) has the characteristic of absorbing moisture, the products packed with the packaging material (1) according to the present invention are prevented from getting effected from the damp and corrosion. It is possible for the nonwoven material (10) to be used in desired width and thickness.

Nonwoven material (10) offers many advantages to both the user and producer. These materials (10) can generally be produced in a quicker and cheaper way. The term nonwoven (10) describes the material category made of textile fibers hold together by sticking the included thermoplastic fibers or by applying an adhesive. The production of the nonwoven fabrics (10) lasts shorter as it does not include the steps of buttonhole preparation, warp preparation and treatment, and therefore its production is low-cost. Moreover, the spun lace (10) can be liquid immerging, liquid repulsive, flexible, strong, soft, tight, fire-retardant, filtering, and antibacterial. In the packaging material (1) according to the present invention, a nonwoven material (10) in a hydrophilic structure with a water, damp, oil immerging characteristic is used.

The resistance layer (30) is the layer which provides the packaging material (1) with resistance against tearing. This layer (30) comprises a polypropylene braided woven fabric. Polypropylene braided woven fabrics have such a structure which is strong and not easily torn. Therefore the packaging material (1) becomes more resistant against the strikes such as friction and stretching thanks to this layer (30).

There is a sticking layer (20) between the resistance layer (30) and the bottom layer (10). The sticking layer (20) comprises film layers such as polyethylene or polypropylene establishing the connection between the resistance layer (30) and the bottom layer (10). In the application known as the lamination method, a thin layer of melted resin is located between the layers (10 and 30), and the layers (10 and 30) are provided to be adhered to each other and not to be separated.

The protecting layer (40) comprises a film layer created with a lamination application on the resistance layer (30). This film layer comprises film layers such as polyethylene and polypropylene. The protecting layer (40) prevents the external factors such as water, oil, dust, sand and mud from getting into the packaging material (1) and therefore these packed products are protected against these external factors.

The packaging material (1) according to the present invention is much lighter by weight compared to the products available in the state of the art, and more resistant against tearing, piercing, and erosion. It is made of 4 layers (10, 20, 30, 40) and its average weight is 95 gr / m². Moreover the nonwoven material (10) is made to absorb the VCI chemical (volatile corrosion inhibitor), and the packaging material (1) according to the present invention is made to be used more efficiently in the packaging processes requiring non-corrosion. The volatile VCI chemicals are spread in the environment, and form a protecting layer in molecular structure on the surface of the metal. Thanks to this protecting layer, the damp, salt, environmental pollution and the other active materials causing corrosion are prevented from getting bound onto the surface of the metal.

The packaging material (1) according to the present invention has been developed to be used especially in packing the glass, iron-steel, metal and aluminum products. However, it is possible to use it in the packaging processes in all the types of industries. For example, it can be used in packing the datebooks and table, hubs, new vehicles and the similar products while they are being carried and transported. Moreover, it is also possible for them to be used as an insulation material by laying them under the flooring. As the resistance thereof is high, the packaging material (1) prevents the products from getting torn-out, scratched or damaged by the external factors in each industry and field that it is used. It also prevents corrosion in the metal products.

In order to prevent the zero-km vehicles from getting damaged by the probable external factors during the carriage and transportation processes, an oil layer is located on their dyed surfaces. When the packaging material (1) according to the present invention is used, the vehicles are prevented from getting damaged during the transportation on the sea or land.

The packaging material (1) according to the present invention comprises a configuration having a double lamination layer (20 and 40) providing protection against the external factors. The present invention is a non-composite material which does not pollute the environment. It has a structure which can be recycled to a 100%. Because of this characteristic, it can be used as the raw material of the plastic industry in the recycling plants. Thanks to the protecting layer (40) composing the most external surface of the package (1), a smoother surface is created for the printing processes for promoting the products of the company. Bu using the polypropylene braided woven fabrics as the resistance layer (30), it is provided to expand the usage area of the fabrics, and therefore the value-added is increased.

## Claims

1. A packaging material (1) according to the present invention, **characterized in** comprising;
- A bottom layer (10) made of nonwoven material composing the inner surface which is in contact with the packed product,
- A resistance layer (30) made of polypropylene braided woven fabric providing resistance to the packaging material,
- A sticking layer (20) located between the resistance layer (30) and bottom layer (10),
- A protecting layer (40) located on the resistance layer (30).

2. A packaging material (1) according to Claim 1, **characterized in that** the said bottom layer (10) is a hydrophilic nonwoven material which can immerge water, damp and oil.

3. A packaging material (1) according to Claim 1, **characterized in that** the said bottom layer (10) is a nonwoven material that absorbed VCI chemical.

4. A packaging material (1) according to Claim 1, **characterized in that** the said sticking layer (20) is a polyethylene or polypropylene film layer providing connection between the resistance layer (30) and the bottom layer (10).

5. A packaging material (1) according to Claim 1, **characterized in that** the said protecting layer (40) is a polyethylene or polypropylene film layer providing impermeability in the packaging material (1).

## Patentansprüche

1. Verpackungsmaterial (1) gemäß der vorliegenden Erfindung, **dadurch gekennzeichnet, dass** es Folgendes umfasst:
- eine Trägerschicht (10), die aus Vliesmaterial besteht und die Innenfläche bildet, die in Kontakt mit dem verpackten Produkt steht,
- eine Festigkeitsschicht (30), die aus umsponnenem Polypropylengewebe besteht und dem Verpackungsmaterial Festigkeit verleiht,
- eine Klebeschicht (20), die zwischen der Festigkeitsschicht (30) und der Trägerschicht (10) angeordnet ist,
- eine Schutzschicht (40), die auf der Festigkeitsschicht (30) angeordnet ist.

2. Verpackungsmaterial (1) nach Anspruch 1, **dadurch gekennzeichnet, dass** die Trägerschicht (10) ein wasserbindendes Vliesmaterial ist, das in Wasser, Dampf und Öl eingetaucht werden kann.

3. Verpackungsmaterial (1) nach Anspruch 1, **dadurch gekennzeichnet, dass** die Trägerschicht (10) ein Vliesmaterial ist, das VCI-Chemikalien absorbieren kann.

4. Verpackungsmaterial (1) nach Anspruch 1, **dadurch gekennzeichnet, dass** die Klebeschicht (20) eine Polyethylen- oder Polypropylenfolienschicht ist, die eine Verbindung zwischen der Festigkeitsschicht (30) und der Trägerschicht (10) bereitstellt.

5. Verpackungsmaterial (1) nach Anspruch 1, **dadurch gekennzeichnet, dass** die Schutzschicht (40) eine Polyethylen- oder Polypropylenfolienschicht ist, die dem Verpackungsmaterial (1) Undurchlässigkeit verleiht.

## Revendications

1. Matériau d'emballage (1) selon la présente invention, **caractérisé en ce qu'**il comprend :
- une couche inférieure (10) en matière non tissée se composant de la surface interne qui est en contact avec le produit emballé,
- une couche de résistance (30) en tissu tissé et tressé de polypropylène offrant une résistance au matériau d'emballage,
- une couche adhésive (20) située entre la couche de résistance (30) et la couche inférieure (10),
- une couche de protection (40) située sur la couche de résistance (30).

2. Matériau d'emballage (1) selon la revendication 1, **caractérisé en ce que** ladite couche inférieure (10) est une matière non tissée hydrophile qui peut être immergée dans de l'eau, un milieu humide et une huile.

3. Matériau d'emballage (1) selon la revendication 1, **caractérisé en ce que** ladite couche inférieure (10) est une matière non tissée qui absorbe les composés chimiques inhibiteurs de corrosion volatils.

4. Matériau d'emballage (1) selon la revendication 1, **caractérisé en ce que** ladite couche adhésive (20) est une couche filmogène de polyéthylène ou polypropylène offrant une liaison entre la couche de résistance (30) et la couche inférieure (10).

5. Matériau d'emballage (1) selon la revendication 1, **caractérisé en ce que** ladite couche de protection (40) est une couche filmogène de polyéthylène ou polypropylène offrant une imperméabilité au matériau d'emballage (1).
